(19) Europäisches Patentamt
European Patent Office
Office européen des brevets

(11) **EP 1 731 558 B1**

(12) **EUROPEAN PATENT SPECIFICATION**

(45) Date of publication and mention
of the grant of the patent:
**15.04.2009 Bulletin 2009/16**

(51) Int Cl.:
*C08K 3/04* (2006.01)     *H01B 1/24* (2006.01)
*C08F 210/02* (2006.01)     *C08F 210/18* (2006.01)
*H01B 7/00* (2006.01)

(21) Application number: **05012354.6**

(22) Date of filing: **08.06.2005**

(54) **Semiconductive crosslinkable polymer composition**

Halbleitende vernetzbare polymere Zusammensetzung

Composition de polymère semi-conducteurs réticulable

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**13.12.2006 Bulletin 2006/50**

(73) Proprietor: **Borealis Technology Oy**
**06101 Porvoo (FI)**

(72) Inventors:
• **Jäger, Karl-Michael**
**417 29 Göteborg (SE)**
• **Johansson, Kenneth**
**444 45 Stenungsund (SE)**

(74) Representative: **Kador & Partner**
**Corneliusstrasse 15**
**80469 München (DE)**

(56) References cited:
**EP-A- 1 041 580     EP-A- 1 188 788
WO-A-97/45465     US-A- 5 539 075
US-B1- 6 376 595**

**Description**

The present invention relates to crosslinkable polymer compositions which are useful for the preparation of semiconductive layers of electric cables.

Electric cables, in particular electric power cables for medium and high voltages, are made of a plurality of polymer layers extruded around the electric conductor. The electric conductor is usually coated first with an inner semiconducting layer, followed by an insulating layer, then an outer semiconducting layer. To these layers, further layers may be added, such as water-barrier layer and a sheath layer.

Normally, the insulating layer and the semiconducting layer are made of ethylene homo- and/or copolymers which are preferably crosslinked. Nowadays, low density polyethylene, crosslinked by adding peroxide compounds, is the predominant cable-insulating material. The inner semi-conducting layer normally comprises an ethylene copolymer, such as an ethylene-ethylacrylate copolymer or an ethylene-butylacrylate copolymer. Outer semiconducting layers can be strippable or non-strippable. Normally, a strippable semiconducting layer comprises an ethylene copolymer in combination with an acrylonitrile-butadiene rubber and sufficient carbon black to make the composition semiconducting. A non-strippable outer semiconducting layer may comprise an ethylene-butylacrylate copolymer together with an amount of carbon black sufficient to make the composition semiconducting.

The amount of carbon black added to make the polymeric material semi-conductive does not only affect electrical properties but also a number of other properties like compounding behavior relavant for the manufacturing of the semiconductive material and extrusion behavior as well as formation of scorch of the final product.

For compounding, the surface area of carbon black particles has to be wetted by the polymeric melt to result in a homogeneous blend. However, since carbon black particles usually have a large specific surface area, even a small reduction in carbon black content facilitates the compounding in terms of compounding rate and consistency (i.e. obtaining consistently a good quality).

There is also a relationship between the amount of carbon black and the rheological properties of the resultant polymeric material. As a general rule, viscosity at a given shear rate increases with increasing carbon black content. Furthermore, increasing viscosity with decreasing shear rate/shear stress is typical for polymers having a high content of filler particles. In dies of complex geometry, there may exist regions of low shear forces. Thus, in these regions, the viscosity is very high and, if exceeding a certain limit, the melt does not pass these regions at a sufficiently high rate. As explained above, insulating and semi-conductive layers are preferably made of crosslinked polyethylene, wherein crosslinking is initiated in a vulcanizing tube by crosslinking agents such as peroxides. However, if a significant amount of peroxide already decomposes in the extruder, thereby initiating premature crosslinking, this will result in so-called "scorch", i.e. formation of inhomogeneity, gel-like areas, surface-unevenness of the extruded polymer etc. To suppress the formation of scorch as much as possible, it is desired to minimize residence time of the polymeric melt including the peroxide within the above mentioned regions of low shear forces. Again, with regard to reduction of scorch, less carbon black would be favored.

In EP-A-0929606, the formation of scorch was reduced by blending a silane-containing polyethylene with carbon black having a surface area of 30-80 m$^2$/g.

In EP-A-1125306, the amount of carbon black was reduced by providing a specific non-uniform ethylene-alkyl (meth)acrylate.

On the other hand, for providing semiconductive cable layers, the amount of carbon black must be sufficiently high. Thus, simply reducing the carbon black content of existing polymer compositions might improve compounding and extrusion behavior but inevitably results in material of high volume resistivity which is not appropriate for semiconductive polymers to be used in power cables.

To improve resistance to thermal and mechanical stress, polymers extruded onto a cable conductor are preferably crosslinked. For crosslinking, the cable is passed through a vulcanization tube, where the cable is heated to activate the crosslinking agent, e.g. peroxides, and initiate crosslinking. To increase production rate, the cable is preferably passed through the vulcanization tube at high line speed. However, at high line speed, the degree of crosslinking might be too low for sufficiently improving thermal and mechanical properties. Thus, to improve production rate, it is desired to have a high crosslinking efficiency, i.e. a high degree of crosslinking obtained within a short period of time. However, any increase of crosslinking efficiency (e.g. by increasing the peroxide content) should not be at the expense of other relevant properties such as compounding, scorch behavior and volume resistivity.

Furthermore, as explained above, if a significant amount of peroxide already decomposes in the extruder, this will result in so-called scorch. Therefore, to suppress the formation of scorch as much as possible, the amount of peroxide needed to sufficiently crosslink the semiconductive material is preferably reduced. However, with too low amounts of peroxide, the degree of crosslinking might be too low for sufficiently improving thermal and mechanical properties. Thus, to improve extrusion behaviour in terms of scorch formation, it is desired to have a high crosslinking efficiency, i.e. a high degree of crosslinking obtained with a low amount of peroxide. Optimally, no peroxide is present within the semiconductive material during the extrusion step. However, any decrease of crosslinking agent should not be at the expense of other relevant properties such as compounding behavior, cable production rate and volume resistivity.

Considering the problems mentioned above, it is an object of the present invention to provide a semiconductive polymer composition wherein the amount of carbon black and/or the amount of peroxide can be reduced without adversely affecting semi-conducting properties. Furthermore, there should be a good balance between crosslinking efficiency, suppression of scorch and reduction of volume resistivity.

This object is solved by providing a semi-conductive crosslinkable polymer composition comprising

(a) an unsaturated polyolefin having at least 0.15 vinyl groups/1000 carbon atoms, and

(b) 1.0-45 wt.% carbon black, based on the weight of the semiconductive crosslinkable polymer composition,

(c) the semiconductive crosslinkable polymer composition containing 1-50 wt.% polar comonomer units per gram of unsaturated polyolefin,

(d) the unsaturated polyolefin being prepared by polymerizing an olefin monomer, at least one polyunsaturated comonomer and a polar comonomer,
wherein the at least one polyunsaturated comonomer consists of a straight carbon chain with at least 8 carbon atoms and at least 4 carbon atoms between the non-conjugated double bonds, of which at least one is terminal, and the semiconductive crosslinkable polymer composition has a volume resistivity of less than 500.000 Ohm • cm, measured at 90°C according to ISO 3915 (1981).

The content of unsaturation, generated by incorporating vinyl groups within the polyolefin component, enables to accomplish improved crosslinking properties. In a preferred embodiment, the number of vinyl groups is at least 0.20/1000 carbon atoms. In other preferred embodiments, it is at least 0.25, at least 0.30, at least 0.35, at least 0.40, at least 0.45, at least 0.55 or at least 0.60 vinyl groups/1000 carbon atoms.

In the present invention, it might be preferred to keep the number of vinyl groups within a certain range to improve balance between properties like crosslinking efficiency, scorch and electrical conductivity. Preferably, the number of vinyl groups is from 0.35 to 3, even more preferably from 0.40 to 1/1000 carbon atoms.

Preferred unsaturated polyolefins of the present invention may have densities higher than 0.860, 0.880, 0.900, 0.910, 0.915, 0.917, or 0.920 g/cm$^3$.

The polyolefin can be unimodal or multimodal, e.g. bimodal.

Preferably, the unsaturated polyolefin has a melt flow rate $MFR_{2.16/190°C}$ of 0.1 to 50 g/10 min, more preferably 0.3 to 20 g/10 min, even more preferably 1.0 to 15 g/10 min, and most preferably 2.0 to 10 g/10 min.

Preferably, the unsaturated polyolefin is prepared by copolymerising at least one olefin monomer with at least one polyunsaturated comonomer. In a preferred embodiment, the polyunsaturated comonomer consists of a straight carbon chain with at least 8 carbon atoms and at least 4 carbon atoms between the non-conjugated double bonds, of which at least one is terminal.

Ethylene and propylene are preferred olefin monomers. Most preferably, ethylene is used as the olefin monomer. As a comonomer, a diene compound is preferred, e.g. 1,7-octadiene, 1,9-decadiene, 1,11-dodecadiene, 1,13-tetradecadiene, or mixtures thereof. Furthermore, dienes like 7-methyl-1,6-octadiene, 9-methyl-1,8-decadiene, or mixtures thereof can be mentioned. Unsaturated polyethylene of low density is preferred, e.g. unsaturated polyethylene having a density within the range of 0.915 to 0.939 g/cm$^3$. In a preferred embodiment, the unsaturated polyethylene contains at least 50 wt-% ethylene monomer units. In other preferred embodiments, the unsaturated polyethylene contains at least 60 wt-%, at least 70 wt-%, at least 80 wt-% or at least 85 wt-% ethylene monomer units.

If the unsaturated polyolefin is an unsaturated polyethylene, its melt flow rate $MFR_{2.16/190°C}$ is preferably 0.1 to 50 g/10 min, more preferably 0.3 to 20 g/10 min, even more preferably 1.0 to 15 g/10 min.

Siloxanes having the following formula:

$$CH_2=CH-[Si(CH_3)_2-O]_n-Si(CH_3)_2-CH=CH_2$$

, wherein n=1 or higher can also be used as a polyunsaturated comonomer. As an example, divinyl-siloxanes, e.g. α, ω-divinylsiloxane, can be mentioned.

In addition to the polyunsaturated comonomer, further comonomers can optionally be used. Such optional comonomers are selected from $C_3$-$C_{20}$ alpha-olefins such as propylene, 1-butene, 1-hexene and 1-nonene, polar comonomers such as acrylic acid, methacrylic acid, acrylates, methacrylates or acetates.

As an example, the crosslinkable polymer composition may contain polar comonomer units, such as 1-50 wt.-%, 3-25 wt.-% and 5-20 wt.-% polar comonomer units per gram of unsaturated polyolefin.

Still more preferably, the polar unsaturated polyolefin comprises a copolymer of ethylene with $C_1$ to $C_4$ acrylates,

such as methyl, ethyl, propyl, butyl acrylates or vinyl acetates.

The unsaturated polyolefin can be produced by any conventional polymerisation process. Preferably, it is produced by radical polymerisation, such as high pressure radical polymerisation. High pressure polymerisation can be effected in a tubular reactor or an autoclave reactor. Preferably, it is a tubular reactor. In general, the pressure can be within the range of 1200-3500 bars and the temperature can be within the range of 150°C-350°C. Further details about high pressure radical polymerisation are given in WO93/08222. However, the unsaturated polyolefin can also be prepared by other types of polymerisation, such as coordination polymerisation, e.g. in a low pressure process, with Ziegler-Natta, chromium, single site/dual site, metallocene (for example transition metal catalysts), non-metallocenes (for example late transition metals). The transition and late transition metal compounds are found in groups 3-10 in the periodic table (IUPAC 1989). These catalysts can be used in the supported and non-supported mode, i.e. with and without carrier.

According to the present invention, the semiconductive crosslinkable polymer composition further comprises carbon black.

The semiconductive properties result from the carbon black added to the unsaturated polyolefin. Thus, the amount of carbon black is at least such that a semiconducting composition is obtained. Depending on the desired use and conductivity of the composition, the amount of carbon black can vary. Preferably, the crosslinking polymer composition comprises 15-50 wt% carbon black, based on the weight of the semiconductive crosslinkable composition. In other preferred embodiments, the amount of carbon black is 10-45 wt.-%, 20-45 wt%, 30-45 wt%, 35-45 wt% or 36-41 wt%, based on the weight of the semiconductive crosslinkable composition.

Any carbon black can be used which is electrically conductive. Examples of suitable carbon blacks include furnace blacks and acetylene blacks.

Suitable furnace blacks may have a primary particle size less than 29nm measured according to ASTM D-3849. Many suitable furnace blacks of this category are characterized by an iodine number between 60 and 300mg/g according to ASTM D-1510 and an oil absorption number between 50 and 200 ml/100g.

Suitable furnace blacks may have a primary particle size of greater than 28nm measured according to ASTM D-3849. Many suitable furnace blacks of this category are characterized by an iodine number between 30 and 200mg/g according to ASTM D-1510 and an oil absorption number between 80 and 300 ml/100g.

Other suitable carbon blacks can be made by any other process or be further treated.

Suitable carbon blacks for semiconductive cable layers are preferably characterized by their cleanliness. Therefore, preferred carbon blacks have an ash-content of less than 0.2 wt-% measured according to ASTM-1506, a 325 mesh sieve residue of less than 30ppm according to ASTM D-1514 and have less than 1 wt-% total sulphur according to ASTM-1619.

Most preferred are extra-clean carbon blacks having an ash-content of less than 0.05 wt-% measured according to ASTM-1506, a 325 mesh sieve residue of less than 15ppm according to ASTM D-1514 and have less than 0.05 wt-% total sulphur according to ASTM-1619.

Preferably, the semiconductive crosslinkable polymer composition has a volume resistivity, measured at 90°C, of less than 500000 Ohm • cm, more preferably less than 100000 Ohm • cm, even more preferably less than 50000 Ohm • cm. Volume resistivity is in a reciprocal relationship to electrical conductivity, i.e. the lower resistivity, the higher is conductivity.

As discussed above, an unsaturated polyolefin having at least 0.15 vinyl groups/1000 carbon atoms and carbon black are essential components of the semiconductive crosslinkable composition of the present invention. In a preferred embodiment, the crosslinkable semiconductive polymer composition comprises (a) an unsaturated polyolefin having 0.35 to 3.0, even more preferably 0.40 to 1.0 vinyl groups/1000 carbon atoms, prepared by polymerizing ethylene with a diene comonomer, optionally in the presence of a further comonomer like propylene and (b) 30 to 45 wt%, even more preferably 36 to 41 wt% carbon black, based on the weight of the crosslinkable semiconductive polymer composition.

According to a preferred embodiment, the semiconductive crosslinkable polymer composition further comprises a crosslinking agent.

In the context of the present invention, a crosslinking agent is defined to be any compound which can initiate radical polymerisation. A crosslinking agent can be a compound capable of generating radicals when decomposed but also comprises the radicals obtained after decomposition. Preferably, the crosslinking agent contains at least one -O-O- bond or at least one - N=N- bond. More preferably, the cross-linking agent is a peroxide and/or a radical obtained therefrom after thermal decomposition.

The cross-linking agent, e.g. a peroxide, is preferably added in an amount of less than 3.0 wt.-%, more preferably 0.2-2.6 wt.-%, even more preferably 0.3-2.2 wt.-%, based on the weight of the crosslinkable polymer composition. When the crosslinking agent is a peroxide, it is preferred that it is present in an amount of less than 1.0 wt.% based on the weight of the semiconductive crosslinkable polymer composition. To have a good balance between scorch and crosslinking efficiency, it might be preferred to add the crosslinking agent, in particular a peroxide, in an amount of 0.3 to 1.0 wt%, even more preferably 0.4 to 0.8 wt%, based on the weight of the semiconductive crosslinkable composition.

The cross-linking agent may be added to the semiconductive crosslinkable composition during the compounding step (i.e. when the unsaturated polyolefin is mixed with the carbon black), or after the compounding step in a separate process, or during the semiconductive crosslinkable composition is extruded, or after the extrusion, e.g. by diffusion of cross-linking radicals from another cable layer into the semiconductive layer.

As peroxides used for crosslinking, the following compounds can be mentioned: di-tert-amylperoxide, 2,5-di (tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, di(tert-butylperoxyisopropyl)benzene, butyl-4,4-bis(tert-butylperoxy)valerate, 1,1-bis (tertbutylperoxy)-3,3,5-trimethylcyclohexane, tert-butylperoxybenzoate, dibenzoylperoxide.

Preferably, the peroxide is selected from 2,5-di(tert-butylperoxy)-2,5-dimethyl-hexane, di(tert-butylperoxy-isopropyl)benzene, dicumylperoxide, tert-butylcumylperoxide, di(tert-butyl)peroxide, or mixtures thereof. Most preferably, the peroxide is di(tert-butylperoxy-isopropyl)benzene.

The semiconductive crosslinkable polymer composition may comprise further additives. As possible additives, antioxidants, scorch retarders, crosslinking boosters, stabilisers, processing aids, flame retardant additives, acid scavengers, inorganic fillers, voltage stabilizers, additives for improving water tree resistance, or mixtures thereof can be mentioned.

A "scorch retarder" is defined to be a compound that reduces the formation of scorch during extrusion of a polymer composition if compared to the same polymer composition extruded without said compound. Besides scorch retarding properties, the scorch retarder may simultaneously result in further effects like boosting, i.e. enhancing crosslinking performance.

Useful scorch retarders can be selected from 2,4-diphenyl-4-methyl-1-pentene, substituted or unsubstituted diphenylethylene, quinone derivatives, hydroquinone derivatives, monofunctional vinyl containing esters and ethers, or mixtures thereof. More preferably, the scorch retarder is selected from 2,4-diphenyl-4-methyl-1-pentene, substituted or unsubstituted diphenylethylene, or mixtures thereof. Most preferably, the scorch retarder is 2,4-diphenyl-4-methyl-1-pentene.

Preferably, the amount of scorch retarder is within the range of 0.005 to 1.0 wt.-%, more preferably within the range of 0.01 to 0.8 wt.-%, based on the weight of the crosslinkable polyolefin composition. Further preferred ranges are 0.03 to 0.75 wt-%, 0.05 to 0.70 wt-% and 0.10 to 0.50 wt-%, based on the weight of the crosslinkable polyolefin composition.

Typical cross-linking boosters may include compounds having an allyl group, e.g. triallylcyanurate, triallylisocyanurate, and di-, tri- or tetraacrylates.

As antioxidant, sterically hindered or semi-hindered phenols, aromatic amines, aliphatic sterically hindered amines, organic phosphates, thio compounds, polymerized 2,2,4-trimethyl-1,2-dihydroquinoline and mixtures thereof, can be mentioned.

Preferably, the antioxidant is selected from the group of diphenyl amines and diphenyl sulfides. The phenyl substituents of these compounds may be substituted with further groups such as alkyl, alkylaryl, arylalkyl or hydroxy groups.

Preferably, the phenyl groups of diphenyl amines and diphenyl sulfides are substituted with tert.-butyl groups, preferably in meta or para position, which may bear further substituents such as phenyl groups.

More preferred, the antioxidant is selected from the group of 4,4'-bis(1,1'dimethylbenzyl)diphenylamine, para-oriented styrenated diphenylamines, 6,6'-di-tert.-butyl-2,2'-thiodi-p-cresol, tris(2-tert.-butyl-4-thio-(2'-methyl-4'hydroxy-5'-tert.-butyl)phenyl-5-methyl)phenylphosphite, polymerized 2,2,4-trimethyl-1,2-dihydroquinoline, or derivatives thereof.

Of course, not only one of the above-described antioxidants may be used but also any mixture thereof.

If an antioxidant, optionally a mixture of two or more antioxidants, is used, the added amount can range from 0.005 to 2.5 wt-%, based on the weight of the unsaturated polyolefin. If the unsaturated polyolefin is an unsaturated polyethylene, the antioxidant(s) are preferably added in an amount of 0.005 to 1.0 wt-%, more preferably 0.01 to 0.80 wt-%, even more preferably 0.05 to 0.60 wt-%, based on the weight of the unsaturated polyethylene. If the unsaturated polyolefin is an unsaturated polypropylene, the antioxidant(s) are preferably added in an amount of 0.005 to 2 wt-%, more preferably 0.01 to 1 wt-%, even more preferably 0.05 to 0.5 wt-%, based on the weight of the unsaturated polypropylene.

Further additives may be present in an amount of 0.005 to 3 wt%, more preferably 0.005 to 2 wt%. Flame retardant additives and inorganic fillers can be added in higher amounts.

From the semiconductive crosslinkable polymer composition comprising at least one of the crosslinking agents as defined above, preferably a peroxide, a semiconductive crosslinked polymer composition can be prepared by treatment under crosslinking conditions, e.g. by heat treatment.

Preferably, the semiconductive crosslinked polymer composition has a volume resistivity, measured at 90°C, of less than 500000 Ohm • cm, more preferably less than 100000 Ohm • cm, even more preferably less than 50000 Ohm • cm.

Furthermore, the semiconductive crosslinked polymer composition preferably has a hot set value, measured according to IEC 811-2-1, of less than 300 %, more preferably less than 200 %, and even more preferably less than 100 %. Hot set values are related to the degree of crosslinking. The lower a hot set value, the higher is the degree of crosslinking.

From the semiconductive crosslinkable polymer composition of the present invention, a multi-layered article can be prepared by applying said composition onto a substrate, preferably by extrusion.

To the semiconductive crosslinkable polyolefin composition, a crosslinking agent, preferably a peroxide, can be added.As already explained above, the point in time for adding the crosslinking agent can be varied. As an example, the crosslinking agent may be added to the semiconductive crosslinkable polymer composition when the unsaturated polyolefin is mixed with the carbon black in a compounding step, or after the compounding step in a separate process step. Furthermore, the crosslinking agent may be added during extrusion of the semiconductive crosslinkable polymer composition.

As a further alternative, the crosslinking agent can be added during and/or after application of the semiconductive crosslinkable polymer composition onto the substrate. In this preferred embodiment, the crosslinking agent can be provided in an external reservoir from which it can migrate into the layer comprising the semiconductive crosslinkable composition. In the context of the present invention, an "external reservoir" is a reservoir which is not part of the layer comprising the semiconductive crosslinkable composition. Preferably, the external reservoir is another layer also applied onto the substrate and containing the crosslinking agent. As explained above, the term "crosslinking agent" has to be defined in a broad sense. Thus, the other layer acting as a reservoir may comprise compounds not yet decomposed but may also comprise radicals resulting from decomposition. From the other layer, the crosslinking agent migrates to the layer comprising the semiconductive crosslinkable composition. Thus, since the crosslinking agent is provided from an external reservoir during and/or after having been applied onto the substrate, the semiconductive crosslinkable polymer composition of the present invention can be extruded without crosslinking agent or at least with a very low amount of crosslinking agent.

In a preferred embodiment, the other layer acting as an external crosslinking agent reservoir is provided adjacent to the layer comprising the semi-conductive crosslinkable polymer composition to facilitate migration of the crosslinking agent. If necessary, migration is enhanced by thermal treatment of one of these layers or both layers.

When sufficient crosslinking agent has been diffused into the semiconductive crosslinkable composition, said composition can be treated under crosslinking conditions. If peroxides are used, crosslinking can be effected by raising the temperature to at least 160-170°C.

Even if the crosslinking agent is added to the semiconductive crosslinkable polymer composition by migration from an external reservoir, it is possible to obtain a semiconductive polymer composition sufficiently crosslinked, as will be further demonstrated below in examples 11-12.

Preferably, crosslinking results in a multilayered article having at least one layer in which the semiconductive crosslinked polymer composition has a hot set value, measured according to IEC 811-2-1, of less than 300 %, more preferably less than 200 %, and even more preferably less than 100 %.

In a preferred embodiment, the multi-layered article is a power cable, i.e. the crosslinkable composition is extruded onto a metallic conductor and/or at least one coating layer thereof for the preparation of a power cable.

Preferably, it is the inner semiconductive layer which is prepared from the semiconductive crosslinkable polymer composition by treatment under crosslinking conditions. However, it is also possible to prepare the inner and the outer semiconductive layer from the crosslinkable polymer composition.

Preferably, the crosslinked semiconductive polymer composition, which may be present as a power cable coating layer, satisfies the following relationship:

$$VR \cdot CB \cdot HS/1000000 \leq 2500$$

wherein

VR: volume resistivity in Ohm • cm, measured at 90°C,
CB: wt% carbon black, based on the total weight of the crosslinked semi-conductive polymer composition, and
HS hot set value in %, measured according to IEC 811-2-1.

More preferable, VR • CB • HS/1000000 ≤ 2000, even more preferable ≤ 1000.

VR and HS are determined for a composition extruded as an inner cable layer at a line speed of 2.2 m/min.

According to another preferred embodiment, the crosslinked semiconductive polymer composition satisfies the following relationship:

$$VR \cdot CB \cdot HS \cdot S/1000000 \leq 80,$$

wherein

VR, CB and HS have the same meaning as indicated above and S is the scorch volume in %, measured at 134.5°C. Again, VR and HS are determined for a composition extruded as an inner cable layer at a line speed of 2.2 m/min.

More preferable, $VR \cdot CB \cdot HS \cdot S/1000000 \; S \leq 50$, even more preferable $\leq 30$.

Preferably, the semiconductive crosslinked polymer composition has a volume resistivity, measured at 90°C, of less than 500000 Ohm ·cm, even more preferably less than 100000 Ohm •cm, and most preferably less than 50000 Ohm •cm.

In the present invention, the use of an unsaturated polyolefin having at least 0.15 vinyl groups/1000 carbon atoms does not only increase crosslinking efficiency and production rate but also enables to reduce carbon black content without adversely affecting volume resistivity. Furthermore, scorch can be suppressed effectively. Thus, even when the amount of carbon black is reduced, there is still a good balance between volume resistivity and scorch behavior. The improved balance enables to obtain a crosslinked semiconductive polymer composition satisfying the relationships mentioned above.

The invention is now further elucidated by making reference to the following examples.

**Examples**

**Testing methods/measuring methods**

a) Determination of the content of double bonds

The procedure for the determination of the number of vinyl groups/1000 C-atoms is based on the ASTM D-3124-72 method. In that method, a detailed description for the determination of vinyliden groups/1000 C-atoms is given based on 2,3-dimethyl-1,3-butadiene. This sample preparation procedure has been applied for the determination of vinyl groups/1000 C-atoms in the present invention. However, for the determination of the extinction coefficient for vinyl groups, 1-decene has been used, and the procedure as described in ASTM D-3124 section 9 was followed.

The degree of unsaturation was analyzed by means of IR-spectrometry and given as the number of vinyl bonds.

The pure polymer is pressed at 150°C into a thin film and cooled down to room temperature. The thickness of the film is about 0.8-1.2 mm. The infrared absorbance of the film is measured by a Perkin-Elmer FT-IR spectrometer Spectro 2000.

The IR absorbance of the vinyl characteristic peak is determined from its peak height over a base line.

The peak is defined by the maximum absorbance in the wave number range from 904-920 cm$^{-1}$. The base line is defined through a linear connection between two points. These two points are set at the lowest absorbance in the wave number range from 910-990 cm$^{-1}$ and from 810-880 cm$^{-1}$, respectively.

The concentration of vinyl groups is expressed as the number of vinyl groups per 1000 carbon atoms in a polymer chain. This value is calculated from the infrared absorbance as determined above.

The absorbance A (peak height at 910 cm$^{-1}$), is related to the number of vinyl groups according to

$$\text{vinyl/1000 C-atoms} = (14 \text{ x } A)/ 13.13 \text{ x } L \text{ x } D),$$

L is the thickness (in mm) of the measured polymer film, and
D is the density (g/cm$^3$) of the same film.

b) Melt flow rate

The melt flow rate is equivalent to the term "melt index" and is determined according to ISO 1133 and is indicated in g/10 min. Melt flow rate is determined at different loadings, such as 2.16 kg ($MFR_2$) used for characterizing the base polymer or 21.6 kg ($MFR_{21}$) for the semiconductive composition. Melt flow rate is determined at a temperature of 190°C.

c) Melt pressure/pressure of the inner semiconductive layer during cable extrusion

Cables with three layers have been made using the semiconductive composition as inner and outer layer. The middle insulation layer is formed of low-density polyethylene LDPE ($MFR_2$=2 g/10 min) containing 2 wt-% of dicumyl peroxide and 0.2 wt-% of 4,4'-thiobis(2-tert.-butyl-5-methylphenol).

The construction of the cables is 50 $mm^2$ stranded Al-conductor and 5.5 mm thick insulation. The inner and outer semiconductive layers have a thickness of 0.9 mm and 0.8 mm, respectively. The cable line is a catenary Nokia Mailefer 1+2 system, thus one extrusion head for the inner conducting layer and another for the insulation + outer semiconductive layer. The semiconductive layers have been exruded by a extruder of 45mm diameter and of a 24 length: diameter ration (L/D). The insulation layer has been exruded by a extruder of 60mm diameter and of a 24 L/D. The cables is cross-linked in the vulcanization tube using nitrogen and afterwards cooled in water. Cables were produced at different line speeds, i.e. 1.6, 2.2 and 2.4 m/min.

The term melt pressure refers to the pressure of the molten semiconductive composition measured at the tip of the extruder screw during production of the cables.

d) Volume resistivity

The volume resisitivity of the semiconductive material is measured on crosslinked polyethylene cables according to ISO 3915 (1981).

Cable specimens having a length of 13.5 cm are conditioned at 1 atm and 60 ± 2°C for 5 ± 0.5 hours before measurement. The resistance of the outer semiconductive layer is measured using a four-terminal system using metal wires pressed against the semiconductive layer. To measure the resistance of the inner semiconductive layer, it is necessary to cut the cable in two halves, removing the metallic conductor. The resistance between the conductive silver paste applied onto the specimen ends is then used to determine the volume resistivity of the inner semiconductive layer. The measurements were carried out at room temperature and 90°C.

The same procedure is used to determine the volume resistivity of compositions that have not yet been crosslinked.

e) Scorch

A laboratory extruder is used with a specifically designed die for the evaluation of scorch in the die. A die with a relatively long channel (about 25 mm in diameter and about 80 mm long) and a high residence time is used to promote scorch.

The test can be carried out at a range of selected temperatures and uses a constant output of about 1 kg/h. The material is run continuously for at least 5 hours. After the test, the hot sample in the die is taken out. The amount of scorch is measured in the sample by examining 0.2-0.3 mm cross sections taken from 6 different position. The volume of scorch in the 6 cross sections is measured by the use of a microscope. The mean value of the 6 cross sections is reported. Further information about the measurement of scorch volume can be found in EP 1 188 788 A1 under the headline "Scorch (BTM 22527)".

f) Hot set

Specimen having been cut from the inner semi-conductive layers of the cables described above. Hot set has been measured according to IEC 811-2-1. Hot set values are related to the degree of crosslinking, i.e. the higher a hot set value, the lower the degree of crosslinking.

g) Shear rate/shear stress/shear viscosity

Shear rate, shear stress and shear viscosity were determined in a Rosand capillary rheometer having a piston diameter of 15 mm, a die length of 20 mm, a die diameter of 1 mm and a die inlet angle of 180°. The preheating time was 10 minutes and the measurement temperature was 130°C.

Examples 1 to 10

6 semiconductive polymer compositions A-F according to the present invention were prepared. Furthermore, 4 comparative compositions Ref. 1 to Ref. 4 were prepared. All the compositions are based on ethylene butylacrylate copolymer with similar butylacrylate content and MFR (table 1). However, for compositions A-F, an increased amount of double bonds was introduced into the polyethylene by effecting polymerization of ethylene with 1,7-octadiene as a polyunsaturated comonomer. Each polymerization reaction was carried out in a high pressure tubular reactor at a pressure of 2000-2500 bar and a temperature of 200-300°C.

In Table 1, the relationship between the amount of unsaturation, indicated by the number of vinyl groups per 1000 carbon atoms, and the amount of 1,7-octadiene is shown. In these runs, octadiene was added to the reactor and after having reached a stable octadiene concentration, samples were taken and analyzed. The results are compared to an ethylene butylacrylate copolymer made under the same conditions but without adding 1,7-octadiene .

**Table 1: Relationship between a diene comonomer and vinyl groups**

| 1,7-octadiene added [wt%] | Vinyl groups per 1000 carbons | $MFR_{2.16,190°C}$ [g/10min] | butylacrylate analyzed [%] |
|---|---|---|---|
| 0 | 0.10 | ≈8 | ≈17 |
| 0 | 0.10 | ≈8 | ≈17 |
| 0.3 | 0.16 | 7.8 | 16.3 |
| 0.6 | 0.23 | 8.5 | 18 |
| 0.9 | 0.38 | 7.4 | 18.4 |
| 1.2 | 0.46 | 7.2 | 16.8 |

The results of Table 1 clearly indicate that the number of vinyl groups increases with increasing amounts of octadiene comonomer.

To all polymer compositions A-F and Ref. 1 to Ref. 4, a peroxide di(tertbutylperoxy-isopropyl)benzene) was added as a crosslinking agent. Furthermore, to obtain a semiconductive material, carbon black was added. The resultant semiconductive compositions are then extruded onto a cable, either as an inner semiconductive layer directly applied onto the cable conductor or as an outer semiconductive layer applied onto an insulation layer. Subsequently, the cable is guided through a vulcanization tube where the cable is heated to activate the peroxide and crosslink the polymer. Cables are run at different line speeds (i.e. from 1.6 to 2.4 m/min) which means that the residence time in the vulcanization tube is shorter with increasing line speed.

A summary of the semiconductive polymer compositions A-F and Ref. 1 to Ref. 4 is given in Table 2. Also provided are values for melt pressure within the extruder, volume resistivity of the inner and outer semi-conductive layer as a function of line speed, hot set, which is an indication for the degree of crosslinking, and formation of scorch.

**Table 2: Summary of semi-conductive compositions**

| | A | B | C | D | E | F | REF1 | REF2 | REF3 | REF4 |
|---|---|---|---|---|---|---|---|---|---|---|
| Peroxide [wt%] | 0.5 | 0.7 | 1 | 0.7 | 0.7 | 1 | 1 | 1 | 1 | 1 |
| CB [wt%] | 39.4 | 39.4 | 39.4 | 38.2 | 35.45 | 37.4 | 39.4 | 35.1 | 37 | 39 |
| no of vinyl groups in base resin [1/1000C] | 0.46 | 0.46 | 0.46 | 0.46 | 0.46 | 0.16 | 0.1 | 0.1 | 0.1 | 0.1 |
| $MFR_{21/190°C}$ [g/10 min] | 21.5 | 21.5 | 21.5 | 37.4 | 48.1 | 34.95 | 25.25 | 47.7 | 37.1 | 24.55 |
| CABLE LINE Melt pressure of inner semicon (bar) | | | | | | | | | | |
| Line speed 1.6 m/min | 160 | 182 | 185 | 132 | 125 | 130 | 150 | | | |
| Line speed 2.2 m/min | 172 | 195 | 195 | 150 | 135 | 150 | 165 | | | |
| | | | | | | | | | | |
| VOLUME RESISTIVITY (Ohm x cm) inner semicon | | | | | | | | | | |

(continued)

| | A | B | C | D | E | F | REF1 | REF2 | REF3 | REF4 |
|---|---|---|---|---|---|---|---|---|---|---|
| Line speed/ temperature | | | | | | | | | | |
| 1.6/25°C | 61 | | | 108 | 273 | | 111 | | | 125 |
| 1.6/90°C | 2300 | | | 1660 | 4345 | 1780 | 2350 | | | 2752 |
| 2.2/25°C | 136 | 164 | 172 | 248 | 1620 | 326 | 368 | | | 252 |
| 2.2/90°C | 15150 | 7910 | 4025 | 14950 | 125500 | 13050 | 32950 | | | 27770 |
| 2.4/25°C | 231 | | | 546 | 1195 | 607 | | | | |
| 2.4/90°C | 39300 | | | 84950 | 225500 | 75450 | | | | |
| outer semicon Line speed/ temperature | | | | | | | | | | |
| 1.6/25°C | 24 | | | 86 | 106 | 47 | 41 | | | 33 |
| 1.6/90°C | 956 | | | 982 | 2235 | 974 | 1115 | 3863 | 1547 | 916 |
| 2.2/25°C | 36 | | | 82 | 124 | 59 | 56 | | | 44 |
| 2.2/90°C | 930 | | | 1295 | 2655 | 1023 | 1390 | | | 1467 |
| HOT SET (%) inner semicon | | | | | | | | | | |
| line speed 1.6 m/min | 16.87 | 9.3 | 5.15 | 6.47 | 11.53 | 8.88 | 10.85 | | | 8.6 |
| line speed 2.2 m/min | 44.97 | 23.4 | 14.4 | 41.27 | 60.05 | 31.43 | 65.25 | | | 36 |
| line speed 2.4 m/min | 118.27 | | | 106.33 | 117.34 | 63.7 | | | | 70 |
| | | | | | | | | | | |
| Scoch volume % Temperature/ accumulated scorch | | | | | | | | | | |
| Temperature [C] | | | | | | | | | | |
| 131.5 | | | | | | | 17.7 | | | |
| 132.9 | | | | | | | 26.7 | | | |
| 133.21 | | | | | | | 26.7 | | | |
| 133.29 | | | | 26.3 | | | | | | |
| 134.5 | | 32.7 | | | | | 34.9 | | | |
| 134.6 | | | 48.8 | | | | | | | |
| 134.8 | | 30.6 | | | | | | | | |
| 134.9 | | | 47 | | | | | | | |
| 135.2 | | | | 39.1 | | | | | | |
| 135.77 | | | | | | | 41.2 | | | |
| 135.85 | 17.9 | | | | | | | | | |
| 137.6 | | | | 54.4 | | | | | | |

(continued)

|  | A | B | C | D | E | F | REF1 | REF2 | REF3 | REF4 |
|---|---|---|---|---|---|---|---|---|---|---|
| 137.8 | 28.7 |  |  |  |  |  |  |  |  |  |
| 137.95 |  |  |  |  |  |  | 54.9 |  |  |  |
| 138.64 | 37 |  |  |  |  |  |  |  |  |  |

The results of Table 2 clearly indicate that in compositions according to the invention a sufficient electrical conductivity can be obtained with a reduced amount of carbon black. Furthermore, a good balance between improved electrical properties, high crosslinking efficiency and reduction of scorch results from the composition according to the invention.

Comparing compositions A and B with Ref. 1, it is clearly indicated that the increased number of vinyl groups enables to lower the amount of peroxide and reduce the formation of scorch. Although the amount of peroxide in compositions A and B is significantly lower than in Ref. 1, the degree of crosslinking at high line speed of 2.2 m/min (i.e. higher production rate) is even increasing, as indicated by the hot set values. The higher a hot set value, the lower the degree of crosslinking.

Furthermore, although the amount and type of carbon black is the same in all samples, volume resistivity in compositions A and B is significantly improved.

As explained above, the formation of scorch causes a number of problems like adhesion of the polymer gel to the surface of the equipment. However, the present invention enables to obtain a composition of sufficiently high electrical conductivity with reduced amount of peroxide, thereby also reducing the scorch. Thus, if the production rate is limited by the formation of scorch and the burden of cleaning, the invention enables to have longer cable runs until scorch occurs.

Comparing composition C and Ref. 1, these compositions only differ in the amount of double bonds, indicated by the number of vinyl groups, whereas the amount of carbon black and peroxide, respectively, remains unchanged.

Table 2 clearly indicates a decrease of volume resistivity, in particular at higher line speed, and an increase of the crosslinking degree whereas there is only a slight increase of scorch. There is still a good balance between conductivity, crosslinking efficiency and scorch.

Thus, if crosslinking speed is the limiting factor for the rate of cable production, the invention allows a faster production rate by using the same amount of peroxide or even less peroxide. Simultaneously, the electrical conductivity is even improved although the amount of carbon black remains unchanged.

In composition D, the amount of carbon black is reduced if compared to Ref. 1. Rheological properties of Composition D and Ref. 1 are summarized in Table 3. As already discussed above, polymers having a high amount of fillers show rapidly increasing viscosity with decreasing shear rate and shear stress. Materials appear to become more "solid-like" as the filler particles are allowed to create a strong network within the polymer melt. This general trend is reflected in Table 3. However, for Ref. 1, the effect is much more pronounced. In particular, at lower shear rate and shear stress, compound D has a lower viscosity, thereby facilitating flow in critical regions of the processing equipment and avoiding stagnancy or blocking.

**Table 3: Relationship between shear rate and viscosity**

|  | REF 1 | | Compound D | |
|---|---|---|---|---|
| Shear rate (/s) | Shear stress (kPa) | Shear viscosity (Pa.s) | Shear stress (kPa) | Shear viscosity (Pa.s) |
| 20 | 203.51 | 10175 | 175.35 | 8768 |
| 50 | 282.67 | 5653 | 245.31 | 4906 |
| 100 | 361.49 | 3615 | 316.99 | 3170 |
| 198 | 457.26 | 2313 | 405.68 | 2051 |
| 400 | 574.18 | 1435 | 511.21 | 1280 |
| 600 | 647.56 | 1079 | 580.70 | 968 |
| 801 | 703.13 | 878 | 629.33 | 787 |

The results of Table 3 clearly indicate that the invention allows faster and easier incorporation of carbon black during compounding and facilitates extrusion with less risk of stagnant zones and lower melt pressure.

Furthermore, although the carbon black content of composition D has been reduced to improve rheological properties, volume resistivity is not adversely effected. On the contrary, at higher line speed (i.e. higher production rate), volume resistivity of composition D is even improved.

The results for composition F indicate that the amount of carbon black can be even further reduced but still enables to have the good balance between rheological properties, electrical conductivity, crosslinking efficiency and scorch behavior. Furthermore, considering the amount of vinyl groups of composition F, the results of Table 2 demonstrate that an increase of vinyl groups beyond the lower limit of the present invention is necessary to obtain the improved properties.

Examples 11 to 12

These examples show that the semiconductive compound of this invention can be sufficiently crosslinked without adding peroxide directly to the compound, but by a migration of peroxide from the insulation layer to the semi-conductive layer. This is of particular interest, because this would mean that no peroxide needs to be present during extruding the semiconductive layer of a cable.

The samples used are sandwich-type plaques (diameter about 8 cm) with one insulation layer (about 4 mm thick) and one semiconductive layer (about 1.3 mm thick). The insulation layer is formed of LDPE ($MFR_2$ = 2g/10 min) containing 2 wt% of dicumyl peroxide and 0.2 wt% of 4,4'-thiobis(2-tert.-butyl-5-methylphenol), and the semiconductive layer is made of the semiconductive material to be tested.

The sandwich plaques are produced by means of a heatable laboratory press. Firstly, sheets of the insulation layer and the semiconductive layer are pressed individually at 120°C for 10 minutes. Secondly, the sheet of the insulation layer and the sheet of the semiconductive layer are brought together and pressed together at 120°C for about 20 minutes. Thirdly, the temperature is increased to 180°C above the activation temperature of the peroxide. The sandwich plaque remains pressed together at 180°C for about 30 minutes so that the crosslinking reaction is completed.

Specimen having been cut from the semiconductive layer. Hot set has been measured according to IEC 811-2-1 using a load of $10N/cm^2$.

The semiconductive materials to be tested were: Composition A but without peroxide added and composition REF 1 but without peroxide added.

The average hot set value of three tests of specimen of Example A without peroxide is 132%. However, when testing the example REF without peroxide none of the three tests allowed a percent hot set to be determined, because the specimen broke due to insufficient crosslinking. This shows that the semiconductive material of the invention has improved crosslinking properties that enable a sufficient crosslinking by the addition of peroxide through migration from the insulating layer.

Examples 13 to 15

Wafer Boil Test

The wafer boil test is indicative whether the crosslinking degree of the semiconductive layer is sufficient.

The wafer boil test has been performed according to AEIC CS5-94, 10th edition, section G.2, on cross sections of the cables described above. Only the cables made at highest line speed (2.4 m/min) have been investigated, since these are most critical for the wafer boil test; i.e. least crosslinked.

As described in the standard above, the wafers have been boiled in decahydronaphthalene for 5 hours. The wafers have been removed from the solvent and examined. A pass/fail results has been given as described in section D.5.1 of the above standard. Accordingly, if the inner semiconductive layer dissolves or cracks such that it does not maintain a continuous ring, the test result is "fail".

Compositions A, D and REF1 have been subjected to the wafer boil test. However, only compositions A and D according to the present invention passed the test, as indicated in Table 4.

Table 4: Results of wafer boil test

| Composition | A | D | REF1 |
|---|---|---|---|
| Rating | passed | passed | failed |

Conclusion from this test:

Although Examples A, D and REF1 appear to have a similar crosslinking degree as measured by the hot set test, the semiconductive material of the present invention is clearly superior in the wafer boil test, which also is a measure of the cross-linking degree. This suggests surprisingly that not only the crosslinking efficiency is enhanced by the increased number of vinyl groups but that, furthermore, the crosslinked polymer morphology is altered in a beneficial manner. This may lead also to the improved conductivity of Examples A and D, although they have the same hot set and the same or less amount of carbon black compared to REF1.

**Claims**

1. A semiconductive crosslinkable polymer composition comprising:

   (a) an unsaturated polyolefin having at least 0.15 vinyl groups/1000 carbon atoms, and
   (b) 10-45 wt.% carbon black, based on the weight of the semiconductive crosslinkable polymer composition,
   (c) the semiconductive crosslinkable polymer composition containing 1-50 wt.% polar comonomer units per gram of unsaturated polyolefin,
   (d) the unsaturated polyolefin being prepared by polymerizing an olefin monomer, at least one polyunsaturated comonomer and a polar comonomer,

   wherein the at least one polyunsaturated comonomer consists of a straight carbon chain with at least 8 carbon atoms and at least 4 carbon atoms between the non-conjugated double bonds, of which at least one is terminal, and the semiconductive crosslinkable polymer composition has a volume resistivity of less than 500.000 Ohm • cm, measured at 90°C according to ISO 3915 (1981).

2. The polymer composition according to claim 1, wherein the unsaturated polyolefin has at least 0.30 vinyl groups/ 1000 carbon atoms.

3. The polymer composition according to claim 1 or 2, wherein at least one polyunsaturated comonomer is a diene.

4. The polymer composition according to claim 3, wherein the diene is selected from 1,7-octadiene, 1,9-decadiene, 1,11-dodecadiene, 1,13-tetradecadiene, 7-methyl-1,6-octadiene, or mixtures thereof.

5. The polymer composition according to any of the preceding claims, wherein the olefin monomer is ethylene.

6. The polymer composition according to claim 5, wherein the unsaturated polyethylene is produced by high pressure radical polymerization.

7. The polymer composition according to one of the preceding claims, further comprising at least one crosslinking agent.

8. The polymer composition according to claim 7, wherein the crosslinking agent is a peroxide which is present in an amount of less than 1.0 wt.%, based on the weight of the semiconductive crosslinkable polymer composition.

9. A process for preparing a multi-layered article, comprising the steps of:

   (a) providing the semiconductive crosslinkable polymer composition according to any of the claims 1 to 8, and
   (b) applying the semiconductive, crosslinkable polymer composition onto a substrate by extrusion.

10. The process according to claim 9, wherein a crosslinking agent is added to the semiconductive crosslinkable polymer composition.

11. The process according to claim 10, wherein the crosslinking agent is added during and/or after application of the semiconductive crosslinkable polymer composition onto the substrate, and the addition is effected by migration from an external reservoir containing the crosslinking agent.

12. The process according to claim 11, wherein the external reservoir is another layer also applied onto the substrate and containing the crosslinking agent.

13. The process according to claim 11 or 12, wherein extrusion of the semiconductive crosslinkable polymer composition is effected without the presence of a crosslinking agent.

14. The process according to one of the claims 11 to 13, wherein the semiconductive crosslinkable polymer composition is treated under crosslinking conditions.

15. The process according to claim 14, wherein the semiconductive crosslinked polymer composition has a hot set value, measured according to IEC 811-2-1, of less than 300%.

16. The process according to one of the claims 9 to 15, wherein the multilayered article is a power cable.

17. A crosslinkable multi-layered article, wherein at least one layer thereof comprises the crosslinkable semiconductive polymer composition according to one of the claims 1 to 8.

18. A crosslinked multi-layered article, obtainable from the crosslinkable multi-layered article according to claim 17 by treatment under crosslinking conditions.

19. The crosslinked multi-layered article according to claim 18, having at least one layer in which the semiconductive crosslinked polymer composition has a hot set value, measured according to IEC 811-2-1, of less than 300 %.

20. The article according to claim 18, which is a power cable.

21. The article according to claim 18 or 20, wherein the crosslinked semiconductive polymer composition within a power cable coating layer satisfies the following relationship:

$$VR \bullet CB \bullet HS/1.000.000 \leq 2.500$$

wherein
VR: volume resistivity in Ohm cm, measured at 90 °C
CB: weight percentage carbon black, based on the total weight of the crosslinked semiconductive polymer composition within the layer;
HS: hot set value in % measured according to IEC 811-2-1.

22. The article according to claim 20 or 21, wherein the power cable has an inner semiconductive layer which is obtained from the crosslinkable semiconductive polymer composition according to one of the claims 1 to 8 by treatment under crosslinking conditions.

**Patentansprüche**

1. Halbleitende, vernetzbare Polymerzusammensetzung, umfassend:

(a) ein ungesättigtes Polyolefin mit mindestens 0,15 Vinylgruppen/1000 Kohlenstoffatome und
(b) 10 bis 45 Gew.-% Ruß, und zwar auf das Gewicht der halbleitenden, vernetzbaren Polymerzusammensetzung bezogen,
(c) wobei die halbleitende, vernetzbare Polymerzusammensetzung 1 bis 50 Gew.-% polare Comonomer-Einheiten pro Gramm ungesättigtes Polyolefin enthält,
(d) wobei das ungesättigte Polyolefin durch Polymerisieren von einem Olefinmonomer, zumindest einem mehrfach ungesättigten Comonomer und einem polaren Comonomer erzeugt wird,

wobei das zumindest eine mehrfach ungesättigte Comonomer aus einer geradkettigen Kohlenstoffkette mit mindestens 8 Kohlenstoffatomen und mindestens 4 Kohlenstoffatomen zwischen den nicht-konjugierten Doppelbindungen besteht, von denen zumindest eine endständig ist, und die halbleitende, vernetzbare Polymerzusammensetzung einen spezifischen Volumenwiderstand von weniger als 500.000 Ohm·cm aufweist, und zwar gemäß ISO 3915 (1981) bei 90°C gemessen.

2. Polymerzusammensetzung nach Anspruch 1, wobei das ungesättigte Polyolefin mindestens 0,30 Vinylgruppen/1000 Kohlenstoffatome aufweist.

**3.** Polymerzusammensetzung nach Anspruch 1 oder 2, wobei zumindest ein mehrfach ungesättigtes Comonomer ein Dien ist.

**4.** Polymerzusammensetzung nach Anspruch 3, wobei das Dien aus 1,7-Octadien, 1,9-Decadien, 1,11-Dodecadien, 1,13-Tetradecadien, 7-Methyl-1,6-octadien oder Gemischen davon ausgewählt ist.

**5.** Polymerzusammensetzung nach einem der vorstehenden Ansprüche, wobei das Olefinmonomer Ethylen ist.

**6.** Polymerzusammensetzung nach Anspruch 5, wobei das ungesättigte Polyethylen durch Hochdruck-Radikalpolymerisation erzeugt wird.

**7.** Polymerzusammensetzung nach einem der vorstehenden Ansprüche, die ferner zumindest ein Vernetzungsmittel umfaßt.

**8.** Polymerzusammensetzung nach Anspruch 7, wobei das Vernetzungsmittel ein Peroxid ist, das in einer Menge von weniger als 1,0 Gew.-% vorliegt, und zwar das Gewicht der halbleitenden, vernetzbaren Polymerzusammensetzung bezogen.

**9.** Verfahren zur Herstellung eines mehrschichtigen Gegenstandes, das die folgenden Schritte aufweist:

> (a) Bereitstellen der halbleitenden, vernetzbaren Polymerzusammensetzung nach einem der Ansprüche 1 bis 8 und
> (b) Aufbringen der halbleitenden, vernetzbaren Polymerzusammensetzung durch Extrusion auf ein Substrat.

**10.** Verfahren nach Anspruch 9, wobei der halbleitenden, vernetzbaren Polymerzusammensetzung ein Vernetzungsmittel zugesetzt wird.

**11.** Verfahren nach Anspruch 10, wobei das Vernetzungsmittel während und/oder nach dem Aufbringen der halbleitenden, vernetzbaren Polymerzusammensetzung auf das Substrat zugesetzt wird und die Zugabe durch Wanderung aus einem externen Reservoir erfolgt, das das Vernetzungsmittel enthält.

**12.** Verfahren nach Anspruch 11, wobei das externe Reservoir eine weitere Schicht ist, die ebenfalls auf das Substrat aufgebracht ist und das Vernetzungsmittel enthält.

**13.** Verfahren nach Anspruch 11 oder 12, wobei das Extrudieren der halbleitenden, vernetzbaren Polymerzusammensetzung ohne das Vorhandensein eines Vernetzungsmittel erfolgt.

**14.** Verfahren nach einem der Ansprüche 11 bis 13, wobei die halbleitende, vernetzbare Polymerzusammensetzung unter Vernetzungsbedingungen behandelt wird.

**15.** Verfahren nach Anspruch 14, wobei die halbleitende, vernetzte Polymerzusammensetzung einen Heißhärtungswert von weniger als 300 % aufweist, und zwar gemäß IEC 811-2-1 gemessen.

**16.** Verfahren nach einem der Ansprüche 9 bis 15, wobei der mehrschichtige Gegenstand ein Stromkabel ist.

**17.** Vernetzbarer, mehrschichtiger Gegenstand, wobei zumindest eine Schicht davon die vernetzbare, halbleitende Polymerzusammensetzung nach einem der Ansprüche 1 bis 8 umfaßt.

**18.** Vernetzter, mehrschichtiger Gegenstand, der von dem vernetzbaren, mehrschichtigen Gegenstand nach Anspruch 17 durch Behandeln unter Vernetzungsbedingungen erhalten werden kann.

**19.** Vernetzter, mehrschichtiger Gegenstand nach Anspruch 18, der zumindest eine Schicht aufweist, in der die halbleitende, vernetzte Polymerzusammensetzung einen Heißhärtungswert von weniger als 300 % aufweist, und zwar gemäß IEC 811-2-1 gemessen.

**20.** Gegenstand nach Anspruch 18, der ein Stromkabel ist.

**21.** Gegenstand nach Anspruch 18 oder 20, wobei die vernetzte, halbleitende Polymerzusammensetzung innerhalb einer Überzugsschicht eines Stromkabels den folgenden Zusammenhang erfüllt:

$$VR \cdot CB \cdot HS / 1.000.000 \leq 2.500$$

worin
VR: spezifischer Volumenwiderstand in Ohm•cm, bei 90°C gemessen
CB: Gewichtsprozentsatz von Ruß, und zwar auf das Gesamtgewicht der vernetzten, halbleitenden Polymerzusammensetzung innerhalb der Schicht bezogen
HS: Heißhärtungswert in %, gemäß IEC 811-2-1 gemessen.

22. Gegenstand nach Anspruch 20 oder 21, wobei das Stromkabel eine innere halbleitende Schicht aufweist, die aus der vernetzbaren, halbleitenden Polymerzusammensetzung nach einem der Ansprüche 1 bis 8 durch Behandeln unter Vernetzungsbedingungen erhalten wurde.

**Revendications**

1. Composition semiconductrice à base de polymère réticulable, comprenant :

(a) une polyoléfine insaturée comportant au moins 0,15 groupes vinyle/1000 atomes de carbone, et
(b) de 10 à 45 % en poids de noir de carbone par rapport au poids de la composition semiconductrice à base de polymère réticulable,
(c) la composition semiconductrice à base de polymère réticulable contenant de 1 à 50 % en poids de motifs comonomères polaires par gramme de polyoléfine insaturée,
(d) la polyoléfine insaturée étant préparée par polymérisation d'un monomère oléfinique, d'au moins un comonomère polyinsaturé et d'un comonomère polaire,

dans laquelle l'au moins un comonomère polyinsaturé consiste en une chaîne carbonée linéaire avec au moins 8 atomes de carbone et au moins 4 atomes de carbone entre les doubles liaisons non conjuguées dont au moins une est terminale, et la composition semiconductrice à base de polymère réticulable a une résistivité volumique de moins de 500 000 ohms.cm, mesurée à 90 °C selon la norme ISO 3915 (1981).

2. La composition à base de polymère selon la revendication 1, dans laquelle la polyoléfine insaturée comporte au moins 0,30 groupes vinyle/1000 atomes de carbone.

3. La composition à base de polymère selon la revendication 1 ou 2,
dans laquelle au moins un comonomère polyinsaturé est un diène.

4. La composition à base de polymère selon la revendication 3, dans laquelle le diène est choisi parmi le 1,7-octadiène, le 1,9-décadiène, 1,11-dodécadiène, 1,13-tétradécadiène, le 7-méthyl-1,6-octadiène ou leurs mélanges.

5. La composition à base de polymère selon l'une quelconque des revendications précédentes, dans laquelle le monomère oléfinique est l'éthylène.

6. La composition à base de polymère selon la revendication 5, dans laquelle le polyéthylène insaturé est produit par polymérisation radicalaire sous haute pression.

7. La composition à base de polymère selon l'une quelconque des revendications précédentes, comprenant, en outre, au moins un agent de réticulation.

8. La composition à base de polymère selon la revendication 7, dans laquelle l'agent de réticulation est un peroxyde qui est présent en une quantité de moins de 1,0 % en poids par rapport au poids de la composition semiconductrice à base de polymère réticulable.

9. Procédé pour la préparation d'un article à plusieurs couches, comprenant les étapes consistant à :

(a) fournir la composition semiconductrice à base de polymère réticulable selon l'une quelconque des revendications 1 à 8, et

(b) appliquer, par extrusion, la composition semiconductrice à base de polymère réticulable sur un substrat.

**10.** Le procédé selon la revendication 9, dans lequel on ajoute un agent de réticulation à la composition semiconductrice à base de polymère réticulable.

**11.** Le procédé selon la revendication 10, dans lequel l'agent de réticulation est ajouté pendant et/ou après l'application de la composition semiconductrice à base de polymère réticulable sur le substrat, et l'addition est effectuée par migration à partir d'un réservoir externe contenant l'agent de réticulation.

**12.** Le procédé selon la revendication 11, dans lequel le réservoir externe est une autre couche également appliquée sur le substrat, et contenant l'agent de réticulation.

**13.** Le procédé selon la revendication 11 ou 12, dans lequel l'extrusion de la composition semiconductrice à base de polymère réticulable est effectuée sans la présence d'un agent de réticulation.

**14.** Le procédé selon l'une des revendications 11 à 13, dans lequel la composition semiconductrice à base de polymère réticulable est traitée dans des conditions de réticulation.

**15.** Le procédé selon la revendication de 14, dans lequel la composition semiconductrice à base de polymère réticulé a une valeur d'allongement à chaud, mesurée selon la norme IEC 811-2-1, de moins de 300 %.

**16.** Le procédé selon l'une des revendications 9 à 15, dans lequel l'article à plusieurs couches est un câble électrique.

**17.** Article réticulable à plusieurs couches, dans lequel au moins une couche de celui-ci comprend la composition semiconductrice à base de polymère réticulable selon l'une des revendications 1 à 8.

**18.** Article réticulé à plusieurs couches, qui peut être obtenu à partir de l'article réticulable à plusieurs couches de la revendication 17, par traitement dans des conditions de réticulation.

**19.** L'article réticulé à plusieurs couches selon la revendication 18, comportant au moins une couche dans laquelle la composition semiconductrice à base de polymère réticulé a une valeur d'allongement à chaud, mesurée selon la norme IEC 811-2-1, de moins de 300 %.

**20.** L'article selon la revendication 18, qui est un câble électrique.

**21.** L'article selon la revendication 18 ou 20, dans lequel la composition semiconductrice à base de polymère réticulé dans une couche de revêtement d'un câble électrique, satisfait à la relation suivante :

$$VR.CB.HS/1.000.000 \le 2500$$

dans laquelle :

VR : résistivité volumique en ohm.cm, mesurée à 90 °C;
CB : pourcentage pondéral de noir de carbone par rapport au poids total de la composition semiconductrice à base de polymère réticulé dans la couche ;
HS : valeur d'allongement à chaud en %, mesurée selon la norme IEC 811-2-1.

**22.** L'article selon la revendication 20 ou 21, dans lequel le câble électrique comporte une couche semiconductrice intérieure qui est obtenue à partir de la composition semiconductrice à base de polymère réticulable de l'une des revendications 1 à 8, par traitement dans des conditions de réticulation.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0929606 A
- EP 1125306 A
- WO 9308222 A
- EP 1188788 A1